# EUROPÄISCHE PATENTSCHRIFT

(11) **EP 0 861 483 B1**
(45) Veröffentlichungstag und Bekanntmachung des Hinweises auf die Patenterteilung: **23.06.1999**
(21) Anmeldenummer: 96932590.1
(22) Anmeldetag: 24.09.1996
(51) Int. Cl.: G09B 9/04

(54) **VORRICHTUNG ZUR SIMULATION VON LÄNGS- UND QUERBESCHLEUNIGUNGEN AN EINER FAHRZEUGKABINE**
DEVICE FOR SIMULATING LONGITUDINAL AND TRANSVERSE ACCELERATIONS ON A VEHICLE COMPARTMENT
DISPOSITIF POUR LA SIMULATION D'ACCELERATIONS LONGITUDINALES ET TRANSVERSALES SUR UNE CABINE D'UN VEHICULE

(30) Priorität: 17.11.1995 DE 19542869
(43) Veröffentlichungstag der Anmeldung: 02.09.1998
(73) Patentinhaber: STN ATLAS Elektronik GmbH, 28309 Bremen (DE)
(72) Erfinder: WILKENS, Rolf, D-28211 Bremen (DE)
(74) Vertreter: Schulz, Klaus, Patentassessor, Dipl.-Ing.
(86) Internationale Anmeldenummer: EP9604155
(87) Internationale Veröffentlichungsnummer: WO9719434

(56) Entgegenhaltungen:
- EP-A- 0 694 896
- DE-A- 3 133 124
- DE-A- 4 109 827
- US-A- 4 251 140
- US-A- 5 022 708

## Beschreibung

Die Erfindung betrifft eine Vorrichtung zur Simulation von Längs- und Querbeschleunigungen an einer Fahrzeugkabine eines Fahrzeugs der im Oberbegriff des Anspruchs 1 definierten Gattung.

Bei einem bereits vorgeschlagenen Bewegungssimulator dieser Art für ein Hochgeschwindigkeits-Schienenfahrzeug (EP 0 694 896 A1) ist das der ersten Bewegungsebene zugehörige Schienenpaar auf einem Grundrahmen mit zwei jeweils von deren Mitte zum Rand hin ansteigenden Rampen mit gleichem Anstiegswinkel angeordnet, wobei jede Schiene eines Schienenpaars in zwei Schienenstücke aufgeteilt ist, von denen jedes auf einer der Rampen befestigt ist. Die auf jeweils einem der insgesamt vier Schienenstücke befindlichen vier Laufwagen tragen einen Zwischenrahmen, auf dessen Oberseite das der zweiten Bewegungsebene zugehörige Schienenpaar in einer planen Ebene befestigt ist. Die auf dem zweiten Schienenpaar laufenden vier Laufwagen tragen eine Plattform, welche die Fahrzeugkabine unter Zwischenschaltung eines Kippmechanismus zum seitlichen Neigen der Fahrzeugkabine um eine Horizontalachse, die quer zu den auf dem Zwischenrahmen verlaufenden Schienen ausgerichtet ist, aufnimmt. Durch entsprechende Steuerung der Antriebsmotoren für den Zwischenrahmen und die Plattform, sowie des Kippmechanismus kann die Fahrzeugkabine zur Simulation von Längs- und Querbeschleunigungen mit Neigung des Fahrzeugs in Längs- und Querrichtung bewegt werden. Eine solche Vorrichtung zur Bewegungssimulation ist konstruktiv sehr aufwendig und bedingt durch das Vorhandensein von Grundrahmen, Zwischenrahmen, Plattform und Kippmechanismus eine relativ große Bauhöhe.

Bei einer bekannten Vorrichtung zur Bewegungssimulation in einem Fahrsimulator (DE 41 09 827 A1) werden die Schienen der ersten Bewegungsebene von einer in einem feststehenden Grundrahmen ausgebildeten, einen Zylinderausschnitt darstellenden Teilschale und die Schienen der zweiten Bewegungsebene von einer an einem Zwischenrahmen ausgebildeten, ebenfalls einen Zylinderausschnitt darstellenden Teilschale gebildet, wobei der Zwischenrahmen mittels Laufwagen auf der ersten Teilschale verfahrbar ist. Die Fahrzeugkabine ist unmittelbar auf einer Plattform aufgenommen, die mittels Laufwagen auf der zweiten Teilschale verfahrbar ist. Diese bekannte Vorrichtung ist weitgehend robust, erfordert aber immer noch einen relativ hohen Konstruktionsaufwand, da sie sich aus drei, gegeneinander verschiebbaren Baueinheiten zusammensetzt, die - da sie aufeinanderliegen - auch eine relativ große vertikale Bauhöhe ergeben.

Der Erfindung liegt die Aufgabe zugrunde, eine Vorrichtung zur Bewegungssimulation der eingangs genannten Art zu schaffen, die durch vereinfachte technische Konstruktion in der Fertigung kostengünstig ist und große mechanische Belastungen, z.B. schwere Fahrzeugkabinen und sogenannte Dome für die Sichtsystemsimulation, aufnehmen kann und auch eine geringe Bauhöhe aufweist.

Die Aufgabe ist durch die Merkmale im Anspruch 1 bzw. im Anspruch 7 gelöst.

Die erfindungsgemäße Vorrichtung zur Bewegungssimulation hat den Vorteil, daß eine seitliche Neigungsbewegung der Fahrzeugkabine ohne fertigungstechnisch aufwendigen Kippmechanismus durch eine einfache Schienenführung erzeugt wird. Durch Wegfall des Kippmechanismus werden nicht nur die Gestehungskosten gesenkt, sondern auch eine niedrige Bauweise realisiert. Schienen und Laufwagen erfordern keine spezielle Eigenfertigung, sondern sind im Handel in diversen Abmessungen und Güten preiswert erhältlich. Die Belastung der erfindungsgemäßen Vorrichtung kann wesentlich vergrößert werden, ohne ihre Funktionalität zu beeinträchtigen, da Schienen und Laufwagen sehr viel größere Kräfte aufnehmen können als die hydraulischen oder elektromotorisch betätigbaren Aktuatoren eines Kippmechanismus. Die erfindungsgemäße Vorrichtung ermöglicht eine sehr gute Nachbildung rein translatorischer Bewegungen bei gleichzeitig überlagerter Neigung sowohl in Längs- als auch in Querrichtung mit einem konstruktiv einfachen und überaus belastbaren System. Damit können lang andauernde Beschleunigungen in Längs- und Querrichtung extrem getreu nachgebildet werden. Vertikale Beschleunigungen des Systems bleiben unterhalb der Wahrnehmungsgrenze. Die Antriebe können elektrisch, hydraulisch oder pneumatisch ausgeführt werden.

Im Vergleich zu der letztgenannten bekannten Bewegungssimulationsvorrichtung sind bei der erfindungsgemäßen Vorrichtung nur noch zwei separate, relativ zueinander bewegliche Baueinheiten, nämlich Grundrahmen und Plattform, vorhanden, so daß sich eine extrem niedrige Bauweise bei großer Robustheit und Belastungsaufnahme ergibt. Durch die Anordnung der Schienen sowie durch die Abstände der Plattformlagerpunkte können sowohl die Neigungswinkel als auch die Plattformauslegung variiert und an unterschiedliche Anforderungen angepaßt werden. Mit speziell geformten Führungsschienen kann durch deren Kurvenverlauf bei horizontaler Auslenkung der Plattform der Augenpunkt oder die Plattformmitte in einer Ebene gehalten werden.

Zweckmäßige Ausführungsformen der erfindungsgemäßen Vorrichtung zur Bewegungssimulation mit vorteilhafter Weiterbildung und vorteilhaften Ausgestaltungen der Erfindung ergeben sich aus den weiteren Ansprüchen.

Gemäß einer vorteilhaften Ausführungsform der Erfindung wird der translatorische Antrieb in der Vorrichtung dadurch realisiert, daß am Grundrahmen und am Zwischenrahmen jeweils ein Spindelantrieb mit einer elektromotorisch angetriebenen Spindel und einer auf der Spindel verschraubbaren Spindelmutter angeordnet ist. Die beiden Spindeln sind rechtwinklig zueinander ausgerichtet und erstrecken sich jeweils mittig zwischen den Schienen an Zwischenrahmen bzw. Plattform. Die Spindelmutter ist mittig an dem Zwischenrahmen bzw. an der Plattform angelenkt.

Die Erfindung ist anhand von in der Zeichnung dargestellten Ausführungsbeispielen im folgenden näher beschrieben. Es zeigen in schematischer Darstellung:
- Fig. 1: eine Seitenansicht einer Vorrichtung zur Bewegungssimulation,
- Fig. 2: eine Ansicht der Vorrichtung gem. Pfeil II in Fig.1,
- Fig. 3: eine perspektivische Ansicht der Vorrichtung in Fig.1 und 2 in Explosionsdarstellung,
- Fig. 4: eine vergrößerte Darstellung der Einzelheit IV in Fig.1,
- Fig. 5: eine schematisch dargestellte Draufsicht der Vorrichtung in Fig. 2,
- Fig. 6: eine perspektivische Ansicht einer Vorrichtung zur Bewegungssimulation gem. einem zweiten Ausführungsbeispiel,
- Fig. 7: eine Ansicht der Vorrichtung gem. Pfeil VII in Fig. 6,
- Fig. 8: eine Ansicht der Vorrichtung gem. Pfeil VIII in Fig. 6.

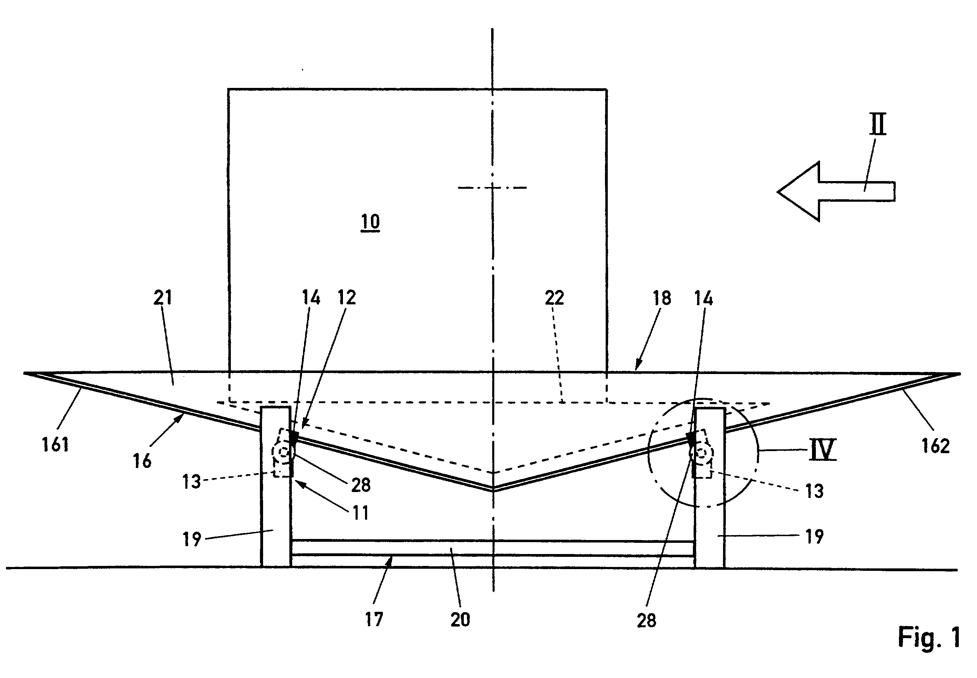

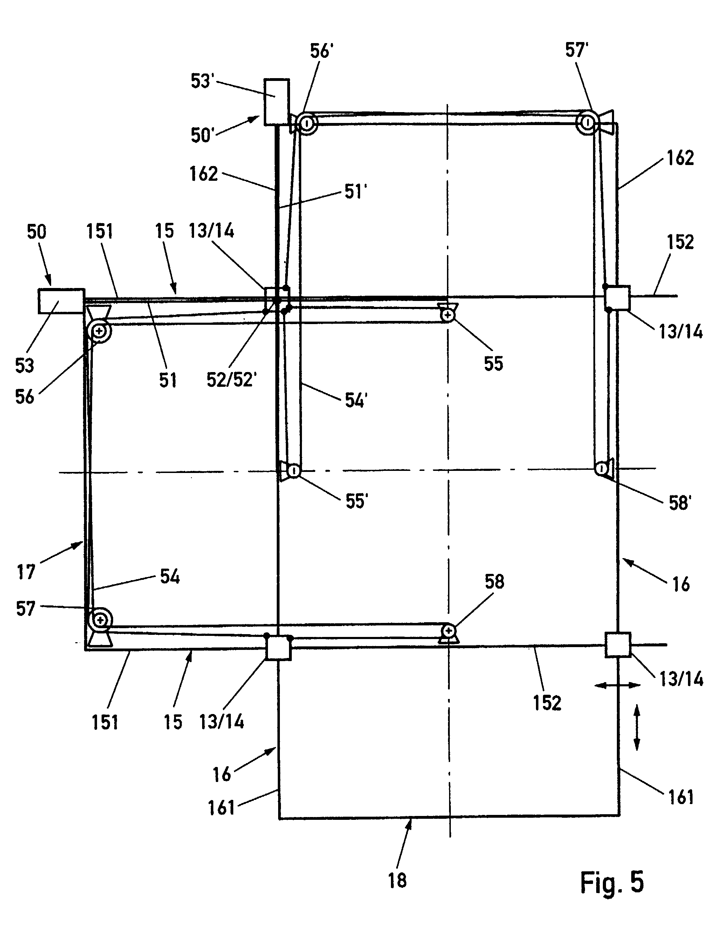

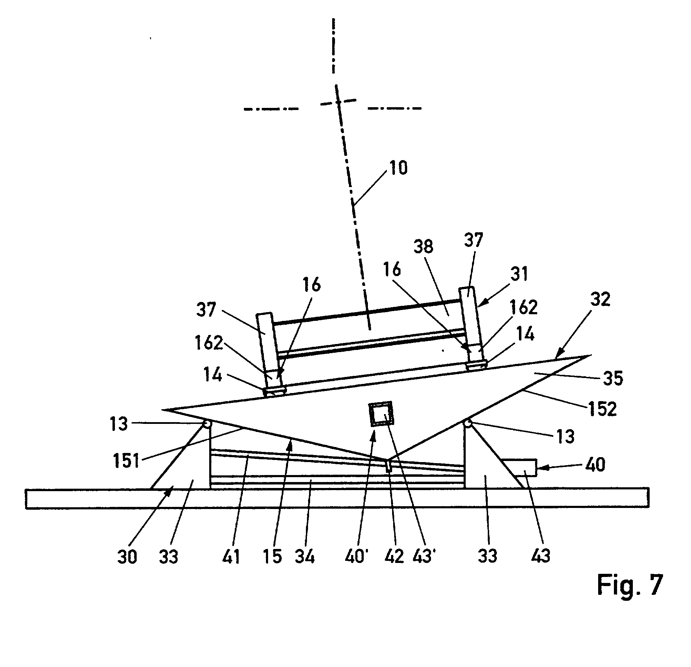

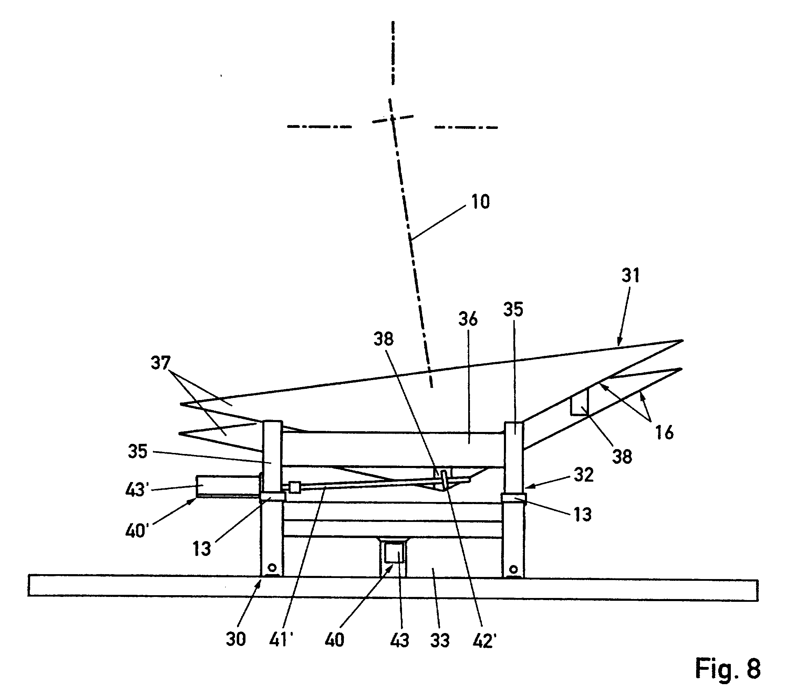

Die in Fig.1 bis 3 in verschiedenen Ansichten und perspektivisch in Explosionsdarstellung gezeigte Vorrichtung zur Bewegungssimulation einer Fahrzeugkabine 10 eines Fahrzeugs dient zum Nachbilden von lang andauernden Beschleunigungen der Fahrzeugkabine 10 in Längs- und Querrichtung. Sie ermöglicht eine nahezu rein translatorische Bewegung bei gleichzeitiger Neigung der Fahrzeugkabine 10, um die Wirkung der Schwerkraft auf den Fahrer zur Nachbildung langanhaltender Beschleunigungen zu nutzen. Das gleiche gilt für die in Fig. 5 bis 7 perspektivisch und in zwei Seitenansichten dargestellte Vorrichtung zur Bewegungssimulation gem, einem weiteren Ausführungsbeispiel. Beide Vorrichtungen sind nach dem gleichen Grundprinzip aufgebaut, wonach eine erste Bewegungsebene 11 für eine Kabinenlängsverschiebung und eine darauf angeordnete zweite Bewegungsebene 12 für eine Kabinenquerverschiebung vorgesehen ist. In jeder Bewegungsebene 11,12 ist jeweils ein Paar im festen Längsabstand voneinander angeordnete Laufwagen 13 bzw. 14 auf jeweils einer von zwei im festen Parallelabstand voneinander angeordneten Schienen 15 bzw. 16 verfahrbar. Jede der Schienen 15,16 steigt ausgehend von der Schienenmitte zum vorderen und hinteren Schienenbereich symmetrisch an. Jede Schiene 15 bzw. 16 ist damit in zwei Schienenstücke 151, 152 bzw. 161,162 unterteilt, die mit gegensinniger Neigung oder Steigung zueinander verlaufen und in Schienenmitte unter einem stumpfen Winkel zusammenstoßen. Die Fahrzeugkabine 10 ist von der zweiten Bewegungsebene 12 aufgenommen. Sie kann dabei fest mit der zweiten Bewegungsebene 12 verbunden sein - wie dies die Ausführungsbeispiele der Fig. 1 bis 5 bzw. 6 bis 8 zeigen - oder auf dieser über elektrische Aktuatoren abgestützt werden, die eine zusätzliche Nick- und Wankelbewegung der Fahrzeugkabine 10 gegenüber der zweiten Bewegungsebene 12 in beliebige Richtungen ermöglichen.

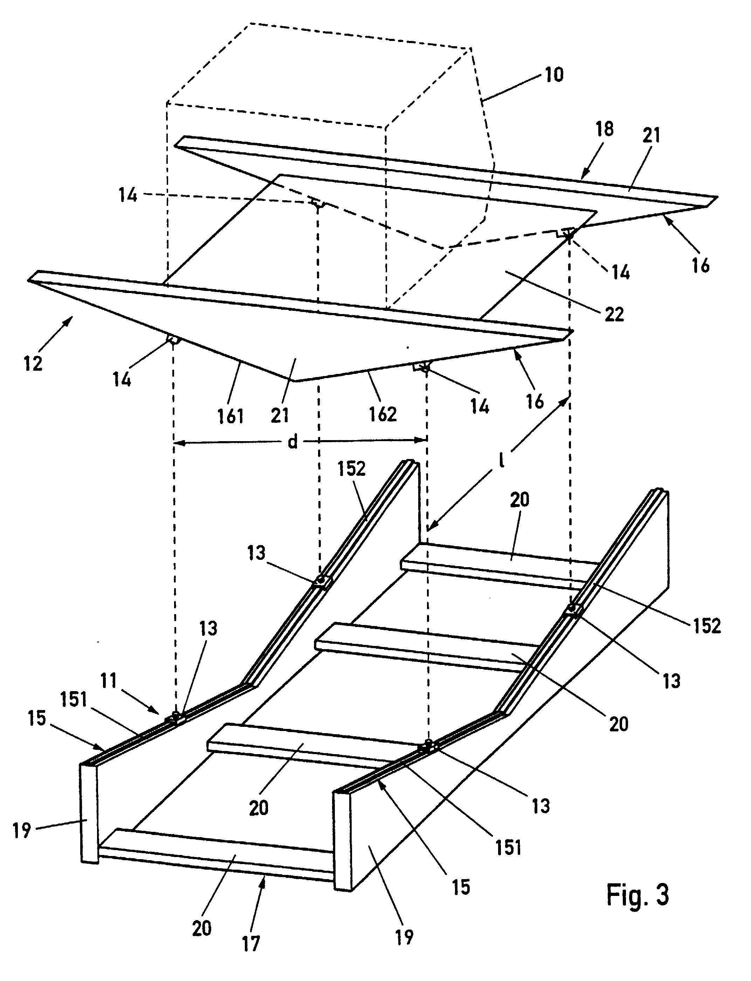

Bei dem Ausführungsbeispiel der Vorrichtung zur Bewegungssimulation gem. Fig. 1 bis 5 ist dieses beschriebene Grundprinzip in der Weise umgesetzt, daß die Schienen 15 der ersten Bewegungsebene 11 auf einem raumfesten Grundrahmen 17 und die Schienen 16 der zweiten Bewegungsebene an einer Plattform 18 befestigt sind, die die Fahrzeugkabine 10 trägt. Entsprechend den beiden im Parallelabstand d (Fig.3) angeordneten Schienen 15 mit den Schienenstücken 151 und 152 besteht der Grundrahmen 17 aus zwei rampenartigen Seitenteilen 19, die durch Querstege 20 miteinander verbunden sind. Auf der Oberseite eines jeden Seitenteils 19 sind zwei von der Mitte des Seitenteils 19 zum vorderen bzw. hinteren Ende des Seitenteils 19 hin ansteigende Rampen ausgebildet, auf denen jeweils ein Schienenstück 151 und 152 der Schienen 15 befestigt ist. Die Plattform 18 weist einen vorderen und hinteren Querträger 21 auf, der jeweils dreieckförmig ausgebildet ist, wobei die Hypothenuse des Querträgers 21 zur Oberseite der Plattform 18 und die beiden stumpfwinkling aneinanderstehenden Katheten zur Unterseite der Plattform 18 weist. Die beiden Querträger 21 sind durch einen Verbindungskörper 22 (in Fig.1 strichliniert eingezeichnet) starr miteinander verbunden. Der Verbindungskörper 22 ist entsprechend der Dreiecksform der Querträger 21 prismenförmig mit dreieckförmigem Prismenquerschnitt ausgebildet, wobei die horizontal ausgerichtete Oberseite des Verbindungskörpers 22 die Fahrzeugkabine 10 aufnimmt. Auf den beiden nach unten zu dem Gundrahmen 17 weisenden Katheten der beiden Querträger 21 ist jeweils ein Schienenstück 161 bzw. 162 der der Plattform 18 zugeordneten Schienen 16 befestigt. Der Parallelabstand der Schienen 16 ist in Fig. 3 mit 1 gekennzeichnet.

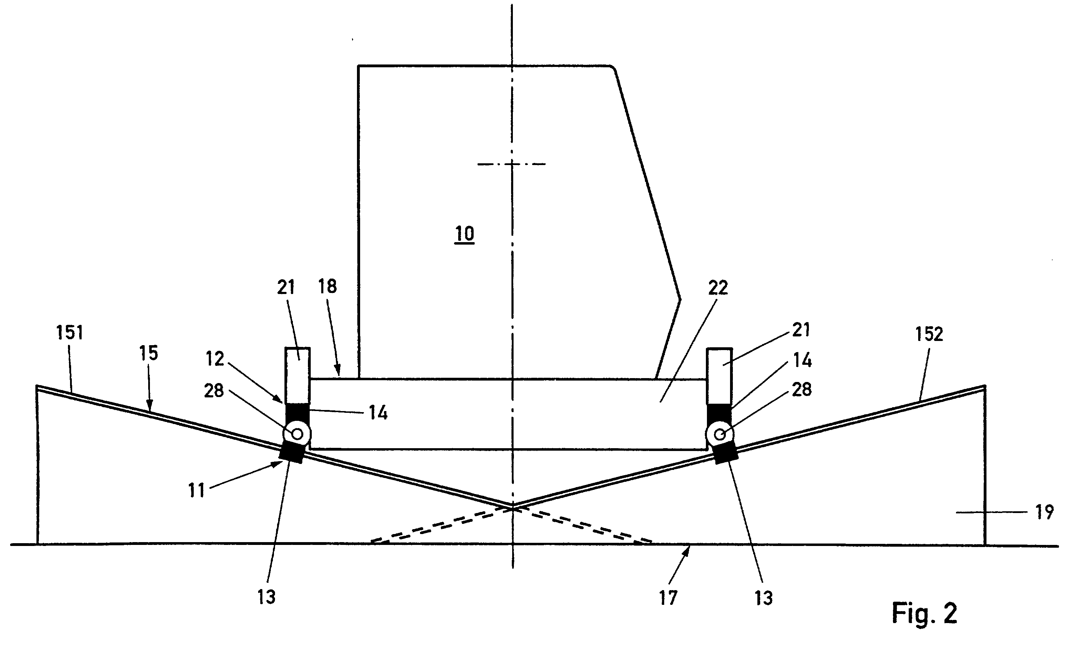

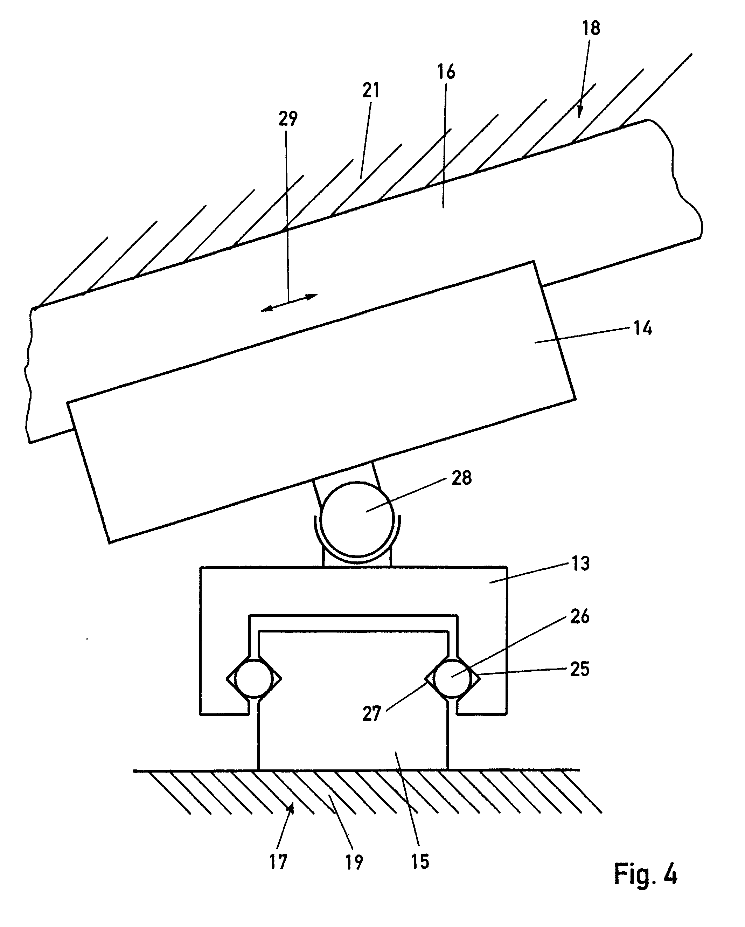

Auf jeder Schiene 15 des Grundrahmens 17 sind zwei Laufwagen 13 verfahrbar, wobei jedes Paar Laufwagen 13 einen festen Abstand voneinander aufweist, der dem Abstand 1 der Schienen 16 an der Plattform 18 entspricht. Einer der beiden Laufwagen 13 läuft dabei auf dem Schienenstück 151 der Schiene 15 und ein Laufwagen 13 auf dem Schienenstück 152 der Schiene 15. Durch Ausbildung einer Übergangsstelle am Stoßpunkt beider Schienenstücke 151, 152 wäre es auch möglich, daß der Laufwagen 13 von dem einen Schienenstück 151 bzw. 152 auf das andere Schienenstück 152 bzw. 151 und umgekehrt auflaufen kann. Auf jeder Schiene 16 der Plattform 18 sind zwei gleichartige Laufwagen 14 verfahrbar, wobei die beiden Laufwagen 14 eines Laufwagenpaars einen festen Abstand voneinander einhalten, der dem Abstand d der beiden Schienen 15 des Grundrahmens 17 voneinander entspricht. Wie aus Fig.1 zu erkennen ist, ist jeweils ein Laufwagen 14 auf einem Schienenstück 161, 162 verfahrbar, wobei wiederum durch entsprechende Ausbildung der Stoßstelle der beiden Schienenstücke 161,162 es ermöglicht werden könnte, daß der Laufwagen 14 von dem Schienenstück 161 bzw. 162 auf das andere Schienenstück 162 bzw. 161 überwechseln kann. Das Zusammenwirken von Laufwagen 13 und Schiene 15 ist in Fig.4 detaillierter dargestellt. Der Laufwagen 13 übergreift beidseitig die Schiene 15 und stützt sich auf jeder Seite mit einer Laufrille 25 über Laufkugeln 26 in einer seitlichen Führungsrille 27 in der Schiene 15 ab. Durch die rechtwinklige Ausrichtung der Schienen 15 und der Schienen 16 zueinander sind auch die auf diesen Schienen 15 bzw. 16 verfahrbaren Laufwagen 13 und 14 rechtwinklig zueinander ausgerichtet. Wie in Fig.1 und 2 schematisch angedeutet und in Fig. 4 im Detail zu erkennen ist, ist jeweils ein Laufwagen 12 mit einem Laufwagen 14 über ein Kugelgelenk 28 verbunden. Anstelle eines Kugelgelenks 28 kann aber auch eine andere bewegliche Verbindung zwischen den Laufwagen 13 und 14 hergestellt werden, die eine Bewegung um drei rechtwinklig aufeinander stehende Rotationsachsen ermöglichen muß. Beispiele für solche bewegliche Verbindungen sind Metall-Gummielemente, aber auch gas- oder flüssigkeitsgefüllte Federbälge, wobei über die Gas- oder Flüssigkeitsfüllung die Gewichtskräfte der Plattform aufgenommen werden.

Zur Erzeugung einer translatorischen Beschleunigung der Fahrzeugkabine 10 mit Neigungsüberlagerung wird jeweils einer der auf jeder der Schienen 15 am Grundrahmen 17 verfahrbaren beiden Laufwagen 13 synchron angetrieben, und zwar nach beiden Seiten in Längsrichtung der Schienen 15. Weiterhin wird die Plattform 18 längs der Schienen 16 in beide Richtungen hin dadurch verschoben, daß ein Laufwagen 14 auf jeder Schiene 16 mit einem an der Plattform 18 festgelegten Antrieb gekoppelt ist. Die translatorische Bewegung der Plattform 18 ist in Fig.4 mit einem Doppelpfeil 29 gekennzeichnet.

In Fig. 5 ist ein Ausführungsbeispiel des Antriebsmechanismus schematisch dargestellt. Die miteinander über das Kugelgelenk 28 verbundenen Laufwagenpaare der auf den Schienen 15 des Grundrahmens 17 verfahrbaren Laufwagen 13 und der auf den Schienen 16 der Plattform 18 verfahrbaren Laufwagen 14 (vgl. Fig. 4) sind in Fig. 5 mit 13/14 angedeutet. Dem Grundrahmen 17 und der Plattform 18 ist je ein elektromotorischer Stellantrieb in Form eines Spindelantriebs 50 bzw. 50' mit einer von einem Elektromotor 53 bzw. 53' angetriebenen Spindel 51 bzw. 51' und einer auf der Spindel 51 bzw. 51' verschraubbaren Spindelmutter 52 bzw. 52' zugeordnet. Die Spindel 51 bzw. 51' ist drehbar am Grundrahmen 17 bzw. an der Plattform 18 gehalten, die Spindelmutter 52 bzw. 52' an einem Laufwagen 13 bzw. 14 auf der einen Schiene 15 bzw. 16 angelenkt. Von jedem Laufwagen 13 bzw. 14 auf der einen Schiene 15 führt ein geschlossener Seilzug 54 bzw. 54' zu dem einen der beiden Laufwagen 13 bzw. 14 auf der anderen Schiene 15 bzw. 16. Der Seilzug 54 ist über am Grundrahmen 17 befestigte Umlenkrollen 55, 56, 57 und 58 geführt, der Seilzug 54' über an der Plattform 18 befestigte Umlenkrollen 55', 56', 57' und 58'. Jeweils zwei Umlenkrollen 55, 56 bzw. 57, 58 (entsprechend 55', 56' bzw. 57', 58') sind an dem Ende der Verschiebewege der beiden Laufwagen 13 (entsprechend 14), also an den Enden der Schienenstücke 151 (entsprechend 161), angeordnet.

Dreht sich der Elektromotor 53, so schraubt sich die Spindel 51 in die Spindelmutter 52 tiefer hinein oder mehr heraus, wodurch das Laufwagenpaar 13/14 längs der Schiene 15 in die eine oder andere Richtung verfahren wird. Über den Seilzug 54 wird das andere Laufwagenpaar 13/14 um den gleichen Verschiebeweg auf der anderen Schiene 15 verschoben. Damit wird die gesamte Plattform 18 längs der beiden Schienen 15 verfahren.

Dreht sich der Elektromotor 53' so verschraubt sich die Spindel 51' in der Spindelmutter 52' am Laufwagen 14. Damit ändert sich die Relativlage des Laufwagens 14 zur Plattform 18 und über den Seilzug 54' auch die Relativlage des Laufwagens 14 auf der anderen Schiene 16. Da die beiden Laufwagen 14 durch ihre Verbindung mit dem Laufwagen 13 auf den beiden Schienen 15 am Grundrahmen 17 festgelegt sind, verschiebt sich die gesamte Plattform 18 quer zum Grundrahmen 17.

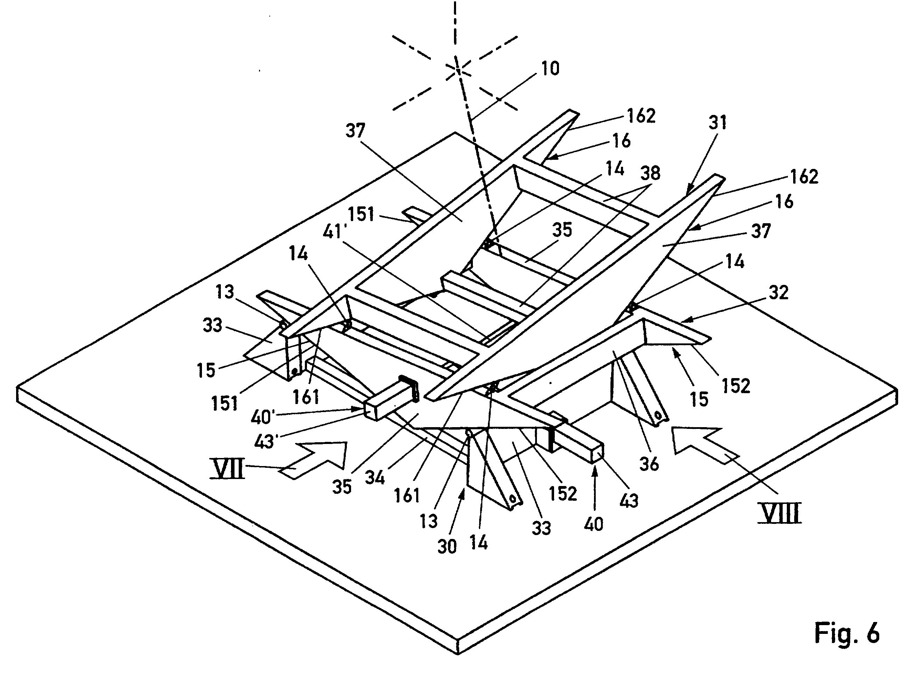

Die in Fig. 6 bis 8 dargestellte, nach dem gleichen Grundprinzip arbeitende, weitere Ausführungsform der Vorrichtung zur Bewegungssimulation weist wiederum einen raumfesten Grundrahmen 30 und eine die nur schematisch angedeutete Fahrzeugkabine 10 tragende Plattform 31 auf. Im Gegensatz zu der Vorrichtung gem. Fig. 1 bis 5 ist noch ein zusätzlicher Zwischenrahmen 32 vorgesehen, der zwischen Grundrahmen 30 und Plattform 31 eingefügt ist. Der Grundrahmen 30 besteht aus zwei im Abstand voneinander angeordneten Seitenteilen 33, die durch Querstege 34 miteinander verbunden sind. Der Zwischenrahmen 32 besteht aus einem dreieckförmingen vorderen Querträger 35 und einem gleich ausgebildeten hinteren Querträger 35, die durch Längsstege 36 miteinander verbunden sind. Die dreieckförmigen Querträger 35 sind dabei so angeordnet, daß ihre Hypothenuse nach oben und ihre beiden stumpfwinklig aufeinanderstoßenden Katheten nach unten zum Grundrahmen 30 hin weisen. Grundrahmen 30 und Zwischenrahmen 32 definieren die erste Bewegungsebene 11 des Systems, wobei die dieser Bewegungsebene 11 zugehörigen Schienen 15 auf den Katheten der Querträger 35 befestigt sind. Die Schienen 15 auf jedem Querträger 35 sind wiederum in zwei Schienenstücke 151 und 152 unterteilt, die jeweils auf einer Katheten des Querträgers 35 liegen. Die auf den Schienen 15 verfahrbaren Laufwagen 13 sind an dem Grundrahmen 30 im Abstand voneinander befestigt, und zwar jeweils zwei Laufwagen 13 auf der Oberseite der Seitenteile 33. Der Abstand der beiden auf einem Seitenteil 33 angeordneten beiden Laufwagen 13 voneinander ist durch den Parallelabstand der beiden Schienen 15 am Zwischenrahmen 32 bestimmt.

Die Plattform 31 ist in gleicher Weise wie der Zwischenrahmen 32 aufgebaut, demgegenüber aber um 90° in der Ebene gedreht auf den Zwischenrahmen 32 aufgesetzt. Sie weist zwei dreieckförmige Längsträger 37 auf, die durch Querstege 38 miteinander verbunden sind. Die Längsträger 37 weisen mit ihrer Dreiecksspitze zum Zwischenrahmen 32 und tragen auf ihren stumpfwinklig aneinanderstoßenden Katheten die Schienen 16 der zweiten Bewegungsebene 12, die wieder um in zwei Schienenstück 161 und 162 unterteilt auf jeder Katheten des Längsträgers 37 befestigt sind. Die auf den Schienen 16 verfahrbaren Laufwagen 14 der zweiten Bewegungsebene sind auf der Oberseite des Zwischenrahmens 32, genauer gesagt auf der Hypothenuse der dreieckförmigen Querträger 35, des Zwischenrahmens 32, befestigt. Der Abstand der beiden auf einem Querträger 35 des Zwischenrahmens 32 angeordneten Laufwagen 14 ist durch den Abstand der beiden Schienen 16 auf den Katheten der Längsträger 37 der Plattform 31 festgelegt.

Der Zwischenrahmen 32 und die Plattform 31 sind in Längsrichtung ihrer Schienen 15 bzw. 16 wiederum nach beiden Seiten verschiebbar, was pneumatisch, elektromotorisch oder hydraulisch erfolgen kann. Im Ausführungsbeispiel der Fig. 5 bis 7 sind hierzu elektromotorische Stellantriebe in Form von zwei Spindelantrieben 40 und 40' vorgesehen. Jeder Spindelantrieb 40 bzw. 40' umfaßt eine von einem Elektromotor 43 bzw. 43' angetriebene Spindel 41 bzw. 41' und eine auf der Spindel 41 bzw. 41' verschraubbare Spindelmutter 42 bzw. 42'. Beim Spindelantrieb 40 für den Zwischenrahmen 32 ist die Spindel 41 im Grundrahmen 30 gelagert und erstreckt sich mittig zwischen den Schienen 15 am Zwischenrahmen 32. Die Spindelmutter 42 ist an einem Längssteg 36 des Zwischenrahmens 32 befestigt, der von Spitze zu Spitze der beiden dreieckförmigen Querträger 35 des Zwischenrahmes 32 verläuft. Beim Spindelantrieb 40' für die Plattform 31 ist die Spindel 41' mit Elektromotor 43 im Zwischenrahmen 32 angeordnet, wobei sich die Spindel 41' mittig zwischen den Schienen 16 an der Plattform 31 erstreckt. Die spindelmutter 42' ist an einem Quersteg 38 angeordnet, der sich zwischen den Spitzen der beiden dreieckförmigen Längsträger 37 erstreckt. Je nach Drehrichtung der Elektromotoren 43, 43' wird die Plattform 18 mit ihren Schienen 16 auf den Laufwagen 14 am Zwischenrahmen 32 in die eine oder andere Richtung und der Zwischenrahmen 32 mit seinen Schienen 15 auf den Laufwagen 13 des Grundrahmens 30 in die eine oder andere Richtung verschoben.

Die Erfindung ist nicht auf die vorstehend beschriebenen Ausführungsbeispiele beschränkt. So müssen die gleichlangen Schienenstücke 151 und 152 bzw. 161 und 162 nicht unter einem stumpfen Winkel zueinander geradlinig verlaufen. Die Schienen 15, 16 können auch bogenförmig ausgeführt oder einen speziell an bestimmte Bedingungen angepaßten Kurvenverlauf aufweisen. Bei dem Ausführungsbeispiel der Vorrichtung der Fig. 1 bis 3 können beispielsweise auch die gleich langen Schienenstücke 151 und 152 am Grundrahmen 17 mit gegensinniger Neigung zueinander parallel versetzt verlaufen und sich - wie in Fig. 2 strichliniert angedeutet ist - unter einem stumpfen Winkel kreuzen. Diese Kreuzung ermöglicht eine größere horizontale Auslenkung und einen größeren Neigungswinkel bei gleichen Abmessungen der Plattform 18.

Die Laufwagen 13, 14 können natürlich auch durch andere Abrollelemente ersetzt werden und die Schienen können durch mit den Abrollelementen zusammenwirkende Abrollbahnen ersetzt werden.

Die beiden Schienen 15 am Grundrahmen 17 und die beiden Schienen 16 an der Plattform 18 mit ihren Schienenstücken 151 und 152 bzw. 161 und 162 können auch jeweils durch ein Schienenpaar von zwei mit Parallelabstand voneinander verlaufenden Schienen ersetzt werden. Auf jedem Schienenstück des Schienenpaars läuft dann ein Laufwagen 13 bzw. 14, pro Schienenpaar also insgesamt vier Laufwagen 13 bzw. 14. Die beiden jeweils auf parallelen Schienenstücken des Schienenpaars laufenden Laufwagen 13 bzw. 14 sind durch eine Verbindungsplatte zu einem Laufwagenpaar zusammengefaßt. Zwischen den Verbindungsplatten zweier dem Grundrahmen 17 und der Plattform 18 zugeordneter Laufwagenpaare sind die Kugelgelenke 28 angeordnet.

## Patentansprüche

1. Vorrichtung zur Simulation von Längs- und Querbeschleunigungen an einer Fahrzeugkabine (10) eines Fahrzeugs mit einer ersten Bewegungsebene (11) für eine Kabinenlängsverschiebung, in der jeweils ein Paar in festem Längsabstand voneinander angeordnete Laufwagen (13) auf jeweils einer von zwei im festen Parallelabstand voneinander angeordenten Schienen (15) verfahrbar sind, die zumindest im vorderen und hinteren Schienenendbereich gleichermaßen, vorzugsweise symmetrisch zur Schienenmitte, ansteigen, und mit einer auf der ersten Bewegungsebene (11) ruhenden zweiten Bewegungsebene (12) für eine Kabinenquerverschiebung, in der wiederum jeweils ein Paar im festen Längsabstand voneinader angeordnete Laufwagen (14) auf jeweils einer von zwei im festen Parallelabstand voneinander angeordneten Schienen (16) verfahrbar sind, die rechtwinklig zu den Schienen (15) in der ersten Bewegungsebene (11) verlaufen, und zumindest im vorderen und hinteren Schienenendbereich gleichermaßen, vorzugsweise symetrisch zur Schienenmitte ansteigen, dadurch gekennzeichnet, daß die zur ersten Bewegungsebene (11) zugehörigen Schienen (15) auf einem raumfesten Grundrahmen (17) und die zur zweiten Bewegungsebene (12) zugehörigen Schienen (16) auf der dem Grundrahmen (17) zugekehrten Unterseite einer die Fahrzeugkabine (10) unmittelbar tragenden Plattform (18) befestigt ist und daß zwischen jedem der auf den Schienen (15) des Grundrahmens (17) verfahrbaren Laufwagen (13) und einem auf den Schienen (16) der Plattform (18) verfahrbaren Laufwagen (14) eine bewegliche Verbindung mit drei rechtwinklig aufeinanderstehenden Rotationsachsen besteht.

2. Vorrichtung nach Anspruch 1 dadurch gekennzeichnet, daß die Verbindung durch ein Kugelgelenk (28), ein um die Hochachse drehbares Kreuzgelenk, ein Metall-Gummielement oder einen gas- oder flüssigkeitsgefüllten Federbalg realisiert ist.

3. Vorrichtung nach Anspruch 1 oder 2, dadurch gekennzeichnet, daß jeweils auf einen der beiden Laufwagen (13 bzw. 14), die auf einer der beiden Schienen (15 bzw. 16) am Grundrahmen (17) und Plattform (18) verfahrbar sind, ein elektromotorischer oder pneumatischer oder hydraulischer steuerbarer Stellantrieb in einer die Laufwagenverschiebung synchronisierte Weise einwirkt.

4. Vorrichtung nach Anspruch 3, dadurch gekennzeichnet, daß sowohl an Grundrahmen (17) als auch an der Plattform (18) jeweils ein Antrieb festgelegt ist, der an einem der Laufwagen (13 bzw.14) von Grundrahmen (17) bzw. Plattform (18) angreift, und daß mit diesem Laufwagen (13 bzw. 14) einer der auf der anderen Schiene (15 bzw. 16) vom Grundrahmen (17) bzw. Plattform (18) verfahrbaren Laufwagen (13 bzw. 14) zur synchronen Bewegung gekoppelt ist.

5. Vorrichtung nach Anspruch 4, dadurch gekennzeichnet, daß der Antrieb als Spindelantrieb (50, 50') mit einer elektromotorisch angetriebenen, am Grundrahmen (17) bzw. an der Plattform (18) gelagerten Spindel (51, 51') und einer am Laufwagen (13 bzw. 14) angelenkten, auf der Spindel (51, 51') verschraubten Spindelmutter (52, 52') ausgebildet ist.

6. Vorrichtung nach Anspruch 4 oder 5, dadurch gekennzeichnet, daß die synchrone Koppelung des zweiten Laufwagens (13 bzw. 14) am Grundrahmen (17) bzw. an der Plattform (18) durch einen über Umlenkrollen (55 bis 58 bzw. 55' bis 58') geführten geschlossenen Seilzug (54 bzw. 54') bewirkt ist.

7. Vorrichtung zur Simulation von Längs- und Querbeschleunigungen an einer Fahrzeugkabine (10) eines Fahrzeugs mit einer ersten Bewegungsebene (11) für eine Kabinenlängsverschiebung, in der jeweils ein Paar in festem Längsabstand voneinander angeordnete Laufwagen (13) auf jeweils einer von zwei im festen Parallelabstand voneinander angeordneten Schienen (15) verfahrbar ist, die zumindest im vorderen und hinteren Schienenbereich gleichermaßen, vorzugsweise symmetrisch zur Schienenmitte, ansteigen, und mit einer auf der ersten Bewegungsebene (11) ruhenden zweiten Bewegungsebene (12) für eine Kabinenverschiebung, in der wiederum jeweils ein Paar im festen Längsabstand voneinander angeordnete Laufwagen (14) auf jeweils einer von zwei im festen Parallelabstand voneinander angeordneten Schienen (16) verfahrbar ist, die rechtwinklig zu den Schienen (15) in der ersten Bewegungsebene (11) verlaufen, und zumindest im vorderen und hinteren Schienenendbereich gleichermaßen, vorzugsweise symmetrisch zur Schienenmitte ansteigen, dadurch gekennzeichnet, daß die zur ersten Bewegungsebene (11) zugehörigen Laufwagen (13) an einem raumfesten Grundrahmen (39) befestigt sind und die zur ersten Bewegungsebene (11) zugehörigen Schienen (15) an der Unterseite eines Zwischenrahmens (32) angeordnet sind und daß die zur der zweiten Bewegungsebene (12) zugehörigen Laufwagen (14) auf der Oberseite des Zwischenrahmens (32) befestigt sind und die zur zweiten Bewegungsebene (12) zugehörigen Schienen (16) an der Unterseite einer die Fahrzeugkabine (10) unmittelbar tragende Plattform (31) angeordnet sind.

8. Vorrichtung nach Anspruch 7, dadurch gekennzeichnet, daß Zwischenrahmen (32) und Plattform (31) jeweils in Längsrichtung ihrer Schienen 15 bzw. 16) pneumatisch, elektromotorisch oder hydraulich nach beiden Seiten verschiebbar sind.

9. Vorrichtung nach Anspruch 8, dadurch gekennzeichnet, daß am Grundrahmen (30) und am Zwischenrahmen (32) jeweils ein Spindelantrieb (40,40') mit einer elektromotorisch angetriebenen Spindel (41,41') und einer auf der Spindel (41,41') verschraubbaren Spindelmutter (42,42') angeordnet ist, daß sich die beiden Spindeln (41,41') rechtwinklig zueinander und jeweils mittig zwischen den Schienen (15 bzw. 16) an Zwischenrahmen (32) bzw. Plattform (31) erstrecken und daß die Spindelmuttern (42,42') mittig an dem Zwischenrahmen (32) bzw. an der Plattform (31) angelenkt sind.

10. Vorrichtung nach einem der Ansprüche 1 bis 9, dadurch gekennzeichnet, daß jede Schiene (15,16) mittig stumpfwinklig so abgewinkelt ist, daß die sich ergebenden Schienenabschnitte (151, 152 bzw. 161, 162) gleich lang sind und unter einem stumpfen Winkel aneinanderstoßen.

11. Vorrichtung nach einem der Ansprüche 1 bis 9, dadurch gekennzeichnet, daß jede Schiene bogenförmig gekrümmt ist.

12. Vorrichtung nach einem der Ansprüche 1 bis 6, dadurch gekennzeichnet, daß jede der am Grundrahmen (17) befestigten Schiene (15) aus zwei Schienenstücken (151, 152) besteht, die mit gegensinniger Neigung zueinander parallel versetzt zueinander verlaufen und sich unter einem stumpfen Winkel kreuzen.

## Claims

1. Device for simulating longitudinal and transverse accelerations on a vehicle compartment (10) of a vehicle with a first plane of movement (11) for a longitudinal displacement of the compartment, in which a respective pair of bogies (13) arranged at a fixed longitudinal distance from one another may be run respectively on one or two rails (15) arranged at a fixed parallel distance from one another, said rails ascending to an equal degree at least in the front and rear rail end region, preferably symmetrically to the rail centre, and with a second plane of movement (12) resting on the first plane of movement (11) for a transverse displacement of the compartment, in which, in turn, a respective pair of bogies (14) arranged at a fixed longitudinal distance from one another may be run respectively on one or two rails (16) arranged at a fixed parallel distance from one another and running at right angles to the rails (15) in the first plane of movement (11) and ascending to an equal degree at least in the front and rear rail end region, preferably symmetrically to the rail centre, characterised in that the rails (15) belonging to the first plane of movement (11) are fastened to a spatially fixed base frame (17) and the rails (16) belonging to the second plane of movement (12) are fastened on the underside facing the base frame (17) of a platform (18) directly supporting the vehicle compartment (10), and that a movable connection with three rotational axes standing at right angles on one another is present between each of the bogies (13), which may be moved on the rails (15) of the base frame (17), and a bogie (14), which may be run on the rails (16) of the platform (18).

2. Device according to Claim 1, characterised in that the connection is formed by a ball-and-socket joint (28), a metal-rubber element or a spring bellows filled with gas or liquid.

3. Device according to Claim 1 or 2, characterised in that in a manner synchronised to the bogie displacement, an electromotive or pneumatic or hydraulic, controllable actuator respectively acts on one of the two bodies (13 or 14), which may be run on one of the two rails (15 or 16) on the base frame (17) and platform (18).

4. Device according to Claim 3, characterised in that a drive, which acts on one of the bogies (13 or 14) of the base frame (17) or platform (18), is respectively fixed both to the base frame (17) and to the platform (18), and that to these bogies (13 or 14) a bogie (13 or 14), which may be run on the other rail (15 or 16) of the base frame (17) or platform (18) is coupled for synchronous movement.

5. Device according to Claim 4, characterised in that the drive is constructed as a spindle drive (50, 50') with a spindle (51, 51') driven by electric motor disposed on the base frame (17) or on the platform (18) and a spindle nut (52, 52') articulated to the bogie (13 or 14) and screwed onto the spindle (51, 51').

6. Device according to Claim 4 or 5, characterised in that the synchronous coupling of the second bogie (13 or 14) to the base frame (17) or to the platform (18) is effected by an endless cable line (54 or 54') directed over deflection rollers (55 to 58 or 55' to 58').

7. Device for simulating longitudinal and transverse accelerations on a vehicle compartment (10) of a vehicle with a first plane of movement (11) for a longitudinal displacement of the compartment, in which a respective pair of bogies (13) arranged at a fixed longitudinal distance from one another may be run respectively on one or two rails (15) arranged at a fixed parallel distance from one another, said rails ascending to an equal degree at least in the front and rear rail end region, preferably symmetrically to the rail centre, and with a second plane of movement (12) resting on the first plane of movement (11) for a transverse displacement of the compartment, in which, in turn, a respective pair of bogies (14) arranged at a fixed longitudinal distance from one another may be run respectively on one or two rails (16) arranged at a fixed parallel distance from one another and running at right angles to the rails (15) in the first plane of movement (11) and ascending to an equal degree at least in the front and rear rail end region, preferably symmetrically to the rail centre, characterised in that the bogies (13) belonging to the first plane of movement (11) are fastened to a spatially fixed base frame (39) and the rails (15) belonging to the first plane of movement (11) are fastened on the underside of an intermediate frame (32), and that the rails (16) belonging to the second plane of movement (12) are arranged on the underside of a platform (31) directly supporting the vehicle compartment (10).

8. Device according to Claim 7, characterised in that the intermediate frame (32) and platform (31) are displaceable to both sides respectively in the longitudinal direction of their rails (15 or 16) by pneumatic, electromotive or hydraulic means.

9. Device according to Claim 8, characterised in that a spindle drive (40, 40') with a spindle (41, 41') driven by electric motor and a spindle nut (42, 42'), which may be screwed onto the spindle (41, 41'), is respectively arranged on the base frame (30) and on the intermediate frame (32), that the two spindles (41, 41') extend at right angles to one another and respectively centrally between the rails (15 or 16) on the intermediate frame (32) or platform (31), and that the spindle nuts (42, 42') are articulated centrally on the intermediate frame (32) or on the platform (31).

10. Device according to one of Claims 1 to 9, characterised in that each rail (15, 16) is centrally angled off at an obtuse angle so that the resulting rail sections (151, 152 or 161, 162) are of equal length and abut one another at an obtuse angle.

11. Device according to one of Claims 1 to 9, characterised in that each rail is curved in an arc shape.

12. Device according to one of Claims 1 to 6, characterised in that each rail (15) fastened to the base frame (17) comprises two rail sections (151, 152), which run at a contrary inclination and displaced parallel to one another and intersect at an obtuse angle.

## Revendications

1. Dispositif pour la simulation d'accélérations longitudinales et transversales sur une cabine (10) d'un véhicule, comportant un premier plan de déplacement (11) pour un coulissement longitudinal de la cabine, dans lequel deux paires de chariots mobiles (13) espacés l'un de l'autre d'une distance longitudinale fixe, sont déplaçables respectivement sur chacun de deux rails (15) disposés à distance parallèle fixe l'un de l'autre, qui montent au moins dans la zone d'extrémité avant et la zone d'extrémité arrière des rails dans une même mesure, de préférence symétriquement par rapport au milieu des rails, et comportant un deuxième plan de déplacement (12), reposant sur le premier plan de déplacement (11), pour la translation transversale de la cabine, dans lequel à nouveau deux paires de chariots mobiles (14), espacés l'un de l'autre d'une distance longitudinale fixe, sont déplaçables respectivement sur chacun de deux rails (16) disposés à distance parallèle fixe l'un de l'autre, qui s'étendent à angle droit par rapport aux rails (15) du premier plan de déplacement (11) et qui, au moins dans la zone d'extrémité avant et la zone d'extrémité arrière des rails, montent dans une même mesure, de préférence symétriquement par rapport au milieu des rails caractérisé en ce que les rails (15) faisant partie du premier plan de déplacement (11) sont fixés sur un cadre de base (17) fixe dans l'espace et les rails (16) faisant partie du deuxième plan de déplacement (12) sont fixés sur la face inférieure, tournée vers le cadre de base (17), d'une plate-forme (18) portant directement la cabine (10) du véhicule, et en ce qu'entre chaque chariot mobile (13) déplaçable sur les rails (15) du cadre de base (17) et un chariot mobile (14) déplaçable sur les rails (16) de la plate-forme (18), il existe une liaison mobile avec trois axes de rotation perpendiculaires les uns aux autres.

2. Dispositif selon la revendication 1, caractérisé en ce que la liaison est réalisée par un joint sphérique (28), un joint à croisillon tournant autour de l'axe vertical, un élément en métal et caoutchouc ou un soufflet élastique rempli de gaz ou de liquide.

3. Dispositif selon la revendication 1 ou 2, caractérisé en ce qu'un mécanisme de positionnement commandable électromotorisé, pneumatique ou hydraulique agit respectivement sur l'un des deux chariots (13 ou 14) qui sont déplaçables sur l'un des deux rails (15 ou 16), prévus sur le cadre de base (17) et sur la plate-forme (18), de manière synchronisant la translation des chariots.

4. Dispositif selon la revendication 3, caractérisé en ce que sur le cadre de base (17) comme sur la plate-forme (18) est fixé un dispositif d'entraînement qui agit sur l'un des chariots (13 ou 14) du cadre de base (17) ou de la plate-forme (18), et en ce qu'avec ces chariots (13 ou 14) est accouplé l'un des chariots (13 ou 14) déplaçables sur l'autre rail (15 ou 16) du cadre de base (17) ou de la plate-forme (18), en vue du déplacement synchrone.

5. Dispositif selon la revendication 1, caractérisé en ce que le dispositif d'entraînement est réalisé en tant que dispositif d'entraînement à broche (50, 50') comprenant une broche (51, 51') entraînée par un moteur électrique, montée sur le cadre de base (17) ou sur la plate-forme (18), ainsi qu'un écrou de broche (52, 52') articulé sur le chariot (13 ou 14) et vissé sur la broche (51, 51').

6. Dispositif selon la revendication 4 ou 5, caractérisé en ce que le couplage synchrone du deuxième chariot (13 ou 14) sur le cadre de base (17) ou sur la plate-forme (18) est réalisé par une commande par câble (54 ou 54') fermée, guidée sur des galets de renvoi (55 à 58 ou 55' à 58').

7. Dispositif pour la simulation d'accélérations longitudinales et transversales sur une cabine (10) d'un véhicule, comportant un premier plan de déplacement (11) pour un coulissement longitudinal de la cabine, dans lequel deux paires de chariots mobiles (13) espacés l'un de l'autre d'une distance longitudinale fixe, sont déplaçables respectivement sur chacun de deux rails (15) disposés à distance parallèle fixe l'un de l'autre, qui montent au moins dans la zone d'extrémité avant et la zone d'extrémité arrière des rails dans une même mesure, de préférence symétriquement par rapport au milieu des rails, et comportant un deuxième plan de déplacement (12), reposant sur le premier plan de déplacement (11), pour la translation transversale de la cabine, dans lequel à nouveau deux paires de chariots mobiles (14), espacés l'un de l'autre d'une distance longitudinale fixe, sont déplaçables respectivement sur chacun de deux rails (16) disposés à distance parallèle fixe l'un de l'autre, qui s'étendent à angle droit par rapport aux rails (15) du premier plan de déplacement (11) et qui, montent au moins dans la zone d'extrémité avant et la zone d'extrémité arrière des rails, dans une même mesure, de préférence symétriquement par rapport au milieu des rails, caractérisé en ce que les chariots faisant partie du premier plan de déplacement (11) sont fixés sur un cadre de base (39) fixe dans l'espace et les rails (15) faisant partie du premier plan de déplacement (11) sont disposés sur la face inférieure d'un cadre intermédiaire (32), et en ce que les chariots (14) faisant partie du deuxième plan de déplacement (12) sont fixés sur la face supérieure du cadre intermédiaire (32) et les rails (16) faisant partie du deuxième plan de déplacement (12) sont disposés sur la face inférieure d'une plate-forme (31) portant directement la cabine (10) du véhicule.

8. Dispositif selon la revendication 7, caractérisé en ce que le cadre intermédiaire (32) et la plate-forme (31) sont déplaçables respectivement dans la direction longitudinale de leurs rails (15 ou 16), des deux côtés, pneumatiquement, hydrauliquement ou de manière électromotorisée.

9. Dispositif selon la revendication 8, caractérisé en ce que sur le cadre de base (30) et sur le cadre intermédiaire (32) est disposé respectivement un dispositif d'entraînement à broche (40, 40') comprenant une broche (41, 41'), entraînée de manière électromotorisée et un écrou de broche (42, 42') pouvant être vissé sur la broche (41, 41') en ce que les deux broches (41, 41') s'étendent à angle droit l'une par rapport à l'autre et chacune au milieu entre les rails (15 ou 16) prévus sur le cadre intermédiaire (32) ou sur la plate-forme (31), et en ce que les écrous de broche (42, 42') s'articulent au milieu sur le cadre intermédiaire (32) ou sur la plate-forme (31).

10. Dispositif selon l'une des revendications 1 à 9, caractérisé en ce que chaque rail (15, 16) est coudé au milieu suivant un angle obtus, de manière que les portions de rail (151, 152 ou 161, 162) en résultant soient de même longueur et se touchent les unes les autres sous un angle obtus.

11. Dispositif selon l'une des revendications 1 à 9, caractérisé en ce que chaque rail est courbé en forme d'arc.

12. Dispositif selon l'une des revendications 1 à 6, caractérisé en ce que chaque rail (15) fixé sur le cadre de base (17) est constitué de deux pièces de rail (151, 152) qui s'étendent avec des pentes en sens contraires, parallèlement entre elles et décalées l'une par rapport à l'autre et se croisent en formant un angle obtus.
